# EUROPÄISCHE PATENTANMELDUNG

(11) **EP 4 115 871 A1**
(43) Veröffentlichungstag der Anmeldung: **11.01.2023**
(21) Anmeldenummer: 21184867.6
(22) Anmeldetag: 09.07.2021
(51) Int. Cl.: A61J 3/07

(54) **ÜBERGABEVORRICHTUNG FÜR EINE KAPSEL UND KAPSELFÜLLMASCHINE MIT ÜBERGABEVORRICHTUNG**

(71) Anmelder: Harro Höfliger Verpackungsmaschinen GmbH, 71573 Allmersbach im Tal (DE)
(72) Erfinder: Huhnen, Florian, 71573 Allmersbach im Tal (DE); Gall, Steffen, 71573 Allmersbach im Tal (DE); Cocks, Jonathan, 71573 Allmersbach im Tal (DE); Wurst, Reiner, 71573 Allmersbach im Tal (DE)
(74) Vertreter: Zurhorst, Stefan

(57) **Zusammenfassung**

Die Erfindung betrifft eine Übergabevorrichtung (2) einer Kapselfüllmaschine für mindestens eine Kapsel (1) aus einer Kapselaufnahme (22) eines Kapselsegmentes (21) zu einer nachfolgenden Prozessstation, sowie eine Kapselfüllmaschine mit einer solchen Übergabevorrichtung. Die Übergabevorrichtung umfasst ein Transportsegment (3) mit mindestens einer Transportaufnahme (4), welche sich entlang einer vertikalen Längsachse (5) erstreckt, wobei die Transportaufnahme (4) als Klemmaufnahme mit einem radial zur Längsachse (5) der Transportaufnahme (4) wirkenden Klemmelement für die Kapsel (1) ausgebildet ist.

## Beschreibung

Die Erfindung betrifft eine Übergabevorrichtung einer Kapselfüllmaschine für mindestens eine Kapsel aus einer Kapselaufnahme eines Kapselsegmentes zu einer nachfolgenden Prozessstation, sowie eine Kapselfüllmaschine mit einer solchen Übergabevorrichtung.

Pharmazeutische Produkte, Produkte aus dem Bereich der Nahrungsergänzungsmittel oder dergleichen werden häufig als Einheitsdosis in einer Steckkapsel beispielsweise aus Hartgelatine verabreicht. Solche Steckkapseln werden im Leerzustand angeliefert und auf Kapselfüllmaschinen mit dem gewünschten Inhalt befüllt. Hierzu kommen Kapselfüllmaschinen zu Einsatz, die verbreitet als Rundläufer mit einem Drehtisch ausgebildet sind. Auf dem Drehtisch sind sogenannte Kapselsegmente angeordnet, welche jeweils mehrere in einer Reihe angeordnete Kapselaufnahmen für jeweils eine Kapsel aufweisen. Der Drehtisch ist in einer Drehebene derart schrittweise verfahrbar, dass die Kapselsegmente sequentiell verschiedene Bearbeitungsstationen durchlaufen. Typische Schritte, die an den einzelnen Bearbeitungsstationen ausgeführt werden, sind das Öffnen der leeren, anfänglich noch verschlossenen Kapseln, das Befüllen und Verschließen derselben, Prüfung, Ausstoß von Schlechtkapseln und schließlich der Ausstoß der als ordnungsgemäß eingestuften Kapseln.

Bei weniger anspruchsvollen Aufgaben können die ordnungsgemäßen Kapseln einfach ausgestoßen und ungeordnet über eine Rutsche oder dergleichen einer nachgeordneten Prozessstation für beispielsweise die Verpackung in Blistern zugeführt werden. Bei höheren Anforderungen an die Prozesssicherheit beispielsweise mit einer 100%-Kontrolle kann eine geordnete Übergabe der Kapseln vom Drehtisch des Kapselrundlaufs an eine solche nachgeordnete Prozessstation erforderlich sein.

Der Erfindung liegt die Aufgabe zugrunde, eine Übergabevorrichtung einer Kapselfüllmaschine für mindestens eine Kapsel aus einer Kapselaufnahme eines Kapselsegmentes zu einer nachfolgenden Prozessstation bereitzustellen, die eine bessere Prüfung des Kapselzustandes erlaubt.

Diese Aufgabe wird durch eine Übergabevorrichtung mit den Merkmalen des Anspruchs 1 gelöst.

Der Erfindung liegt die Aufgabe zugrunde, eine Kapselfüllmaschine anzugeben, bei der eine Kapselprüfung unter Beibehaltung der Spurzuordnung möglich ist.

Diese Aufgabe wird durch eine Kapselfüllmaschine mit den Merkmalen des Anspruchs 7 gelöst.

Nach der Erfindung sind eine Übergabevorrichtung sowie eine Kapselfüllmaschine mit einer solchen Übergabevorrichtung vorgesehen, wobei die Übergabevorrichtung ein Transportsegment mit mindestens einer Transportaufnahme umfasst. Die Transportaufnahme erstreckt sich entlang einer vertikalen Längsachse. Außerdem ist die Transportaufnahme als Klemmaufnahme mit einem radial zur Längsachse der Transportaufnahme wirkenden Klemmelement für die Kapsel ausgebildet. Die Transportaufnahme ist insgesamt starr, während das Klemmelement elastisch nachgiebig ist. Hierfür kann ein Federelement, ein Schaumstoff, ein Elastomer oder dergleichen vorgesehen sein. Zweckmäßigerweise ist das Klemmelement in Form einer Bürste ausgebildet. Die Klemmkraft wirkt reibschlüssig allein quer zur Bewegungsrichtung der Kapsel, so dass die Kapsel allein durch Überwindung dieser Klemmkraft aufgenommen und auch wieder ausgestoßen werden kann. Es ist eine kostengünstige und funktionssichere Vorrichtung für die Übergabe von Kapseln zu einer nachfolgenden Prozessstation geschaffen, welche im Einsatz bei hoher Taktrate funktionssicher ist, und welche sich konstruktiv leicht an die Einbausituation anpassen lässt.

Es kann zweckmäßig sein, das Transportsegment mit nur einer oder mit nur einigen wenigen Transportaufnahmen auszustatten. In vorteilhafter Weiterbildung weist das Transportsegment eine mit der Anzahl der Kapselaufnahmen des Kapselsegments korrespondierende Anzahl von Transportaufnahmen auf. Außerdem ist eine ebenfalls damit korrespondierende Anzahl von Ausstoßmitteln insbesondere in Form von Stößeln vorgesehen. Im vorangegangenen Durchlauf durch die einzelnen Stationen ringsum den Drehtisch der Kapselfüllmaschine hatten alle Kapseln in ihrem jeweiligen Kapselsegment eine individuell zugeordnete Kapselaufnahme, so dass sie auf eigenen, individuellen Spuren bewegt wurden. Mit dem in analoger Weise ausgebildeten Transportsegment erfolgt die Übergabe aus dem Kapselrundlauf unter Beibehaltung dieser Spuren, so dass eine spurgenaue Weiterbehandlung der Kapseln erfolgen kann. Beispielsweise können in nachfolgenden Prüfstationen Unregelmäßigkeiten an den Kapseln identifiziert und einer bestimmten Spur zugeordnet werden. Auf diese Weise kann bestimmt werden, ob sich in einer bestimmten Spur eine systematische Abweichung oder gar ein systematischer Fehler eingestellt hat.

In vorteilhafter Weiterbildung der vorgenannten Ausgestaltung sind die Transportaufnahmen des Transportsegments in einem größeren Abstand zueinander angeordnet als die Kapselaufnahmen des Kapselsegments. Zur Überbrückung ist an der Ausstoßstation zwischen den Kapselaufnahmen und den Transportaufnahmen eine entsprechende Anzahl von Übergabekanälen positioniert. Beim Durchlauf der Kapseln durch die Übergabekanäle wird der Abstand zwischen ihnen um das gewünschte Maß vergrößert, so dass nachfolgende Prozessschritte wie beispielsweise Prüf- oder Messvorgänge leichter und mit besserer Zugänglichkeit ausgeführt werden können. Die Übergabekanäle bringen es außerdem mit sich, dass das Transportsegment relativ hoch oberhalb der Kapselsegmente zu liegen kommt. Der hierdurch erzielte Höhengewinn schafft Bauraum für zusätzliche Komponenten wie beispielsweise eine Wiegezelle.

Für die Übergabe der Kapseln aus den Kapselsegmenten durch die Übergabekanäle hindurch in das Transportsegment kommen verschiedene Mittel in Betracht. Bevorzugt sind die zugehörigen Ausstoßmittel als Stößel zum Ausstoßen der Kapseln aus den Kapselaufnahmen ausgebildet und weisen einen integrierten Druckluftkanal zum Blasen der Kapseln durch die Übergabekanäle hindurch in die jeweilige Transportaufnahme des Transportsegments auf. Die genannten Ausstoßmittel üben damit eine Doppelfunktion aus. Zunächst stoßen sie die Kapseln aus ihrem vergleichsweise festen Sitz in den Transportsegmenten aus, wozu ein nur geringer Stößelhub erforderlich ist. Der sich hieran anschließende, größere Transportweg durch die Übergabekanäle hindurch wird dann infolge eines durch den hohlen Stößel aufgebrachten Druckluftstoßes zurückgelegt. Der Druckluftstoß reicht auch aus, die Kapsel ordnungsgemäß in die erfindungsgemäße Klemmaufnahme einzuführen. Es ist ein einfacher und betriebssicherer Antrieb für den vergleichsweise großen Übergabeweg gebildet.

Die Transportaufnahme ist zweckmäßig als durch das Transportsegment durchgehender, beidseitig offener Kanal mit einer unteren Öffnung mit einer oberen Öffnung ausgebildet, wobei ein erster Abstand zwischen den beiden Öffnungen kleiner als die Länge der Kapsel ist. Der beidseitig offene Kanal erlaubt einen beidseitigen Zugriff auf die Kapsel sowohl für Test- und Messzwecke als auch für einen nachfolgenden Ausstoß der Kapsel. Der geringe Abstand zwischen den beiden Öffnungen sorgt dafür, dass die Kapsel über die Kontur des Transportsegments hervorsteht, und deshalb für Test- und Messzwecke optisch erfasst und/oder abgetastet werden kann.

In bevorzugter Weiterbildung ist korrespondierend zu den bereits genannten Ausstoßmitteln ein Anschlagelement unmittelbar oberhalb der Transportaufnahme in einem zweiten Abstand zur oberen Öffnung positioniert, wobei der zweite Abstand an die Länge der Kapsel derart angepasst ist, dass die Kapsel in einem am Anschlagelement anliegenden Zustand nach unten über der unteren Öffnung und nach oben über der oberen Öffnung hervorsteht. Mit anderen Worten dient das Anschlagelement einer lagegenauen axialen Positionierung der Kapsel im Transportsegment derart, dass sie beidseitig übersteht. Das Transportsegment kann nun aus dem Wirkungsbereich des Anschlagelements fortgeschwenkt werden, so dass beide Kapselenden frei zugänglich sind.

Dementsprechend ist die Transportaufnahme mit der darin gehaltenen Kapsel zu einer Prüfstation verfahrbar, wobei im Bereich einer solchen Prüfstation Prüfmittel zum Prüfen der in der Kapselaufnahme gehaltenen Kapsel angeordnet sind. Solche Prüfmittel sind insbesondere in Form einer Messkamera und /oder in Form einer mechanischen Längenmesseinrichtung und /oder dergleichen ausgebildet, und können aufgrund des vorgenannten Kapselüberstandes geeignete Parameter der Kapsel erfassen.

Ein Ausführungsbeispiel der Erfindung ist nachfolgend anhand der Zeichnung näher beschrieben. Es zeigen:
- Fig. 1: in einer schematischen Draufsicht eine Kapselfüllmaschine in erfindungsgemäßer Ausgestaltung mit Drehtisch, mit Kapselsegmenten auf dem Dreh-tisch, sowie mit einer Übergabevorrichtung für mindestens eine Kapsel aus einem der Kapselsegmente zu einer nachfolgenden Prozessstation,
- Fig. 2: in einer schematischen Schnittdarstellung die Übergabevorrichtung nach Fig. 1 bei der Aufnahme einer Kapsel aus dem Kapselsegment,
- Fig. 3: in einer Schemadarstellung die Vergrößerung des Abstandes zwischen den Kapseln beim Übergang vom Kapselsegment zum Transportsegment,
- Fig. 4: in einer Schemadarstellung eine im Transportsegment klemmend gehaltenen Kapsel bei der Kameraerfassung,
- Fig. 5: in einer Schemadarstellung eine im Transportsegment klemmend gehaltenen Kapsel bei der Längenerfassung, und
- Fig. 6: die Anordnung nach Fig. 2 beim Kapselausstoß für die Übergabe an eine nachfolgende Prozessstation.

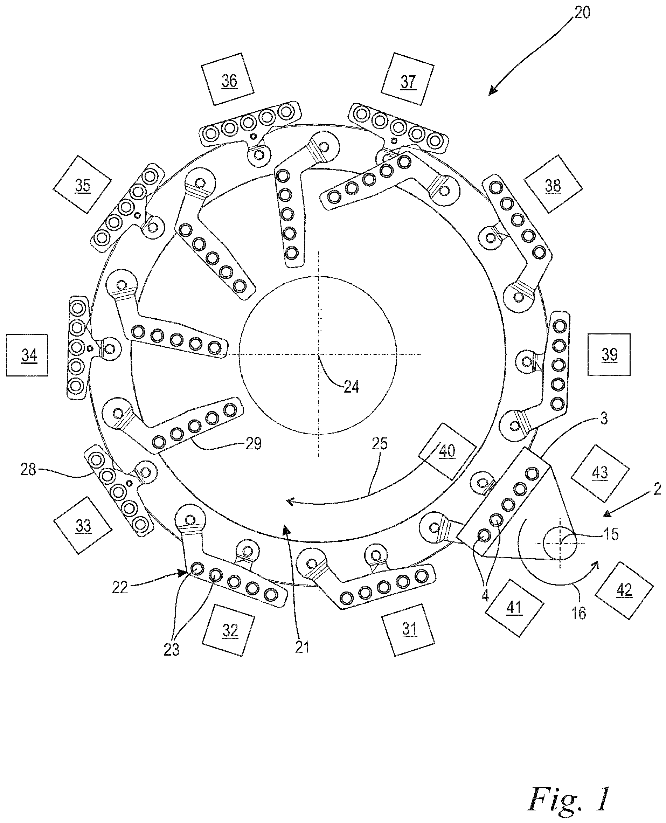

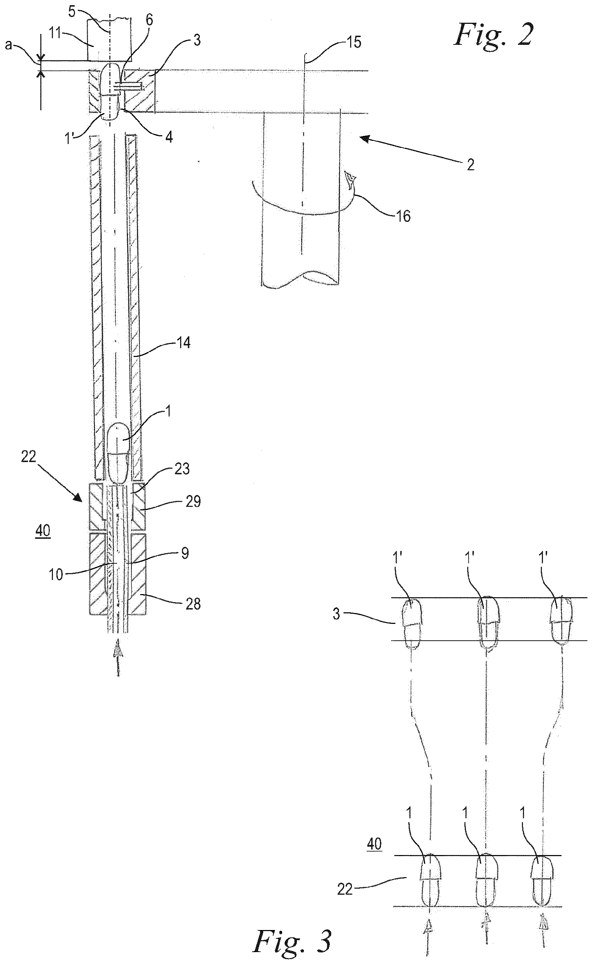

Fig. 1 zeigt in einer Draufsicht den zentralen Teil einer erfindungsgemäß ausgeführten Kapselfüllmaschine 20 zum Befüllen von Kapseln 1 (Fig. 2) mit einem Füllgut. Das Füllgut kann in Form eines Pulvers, eines Granulats, Tabletten oder dgl. bereitgestellt sein. Dabei kann es sich um ein pharmazeutisches Präparat, ein Nahrungsergänzungsmittel oder dergleichen handeln. Die Kapseln 1 bestehen aus einem Kapselunterteil und einem darauf aufgesteckten Kapseloberteil, die beide beispielsweise aus Hartgelatine hergestellt sind.

Die Kapselfüllmaschine 20 nach Fig. 1 umfasst einen Drehtisch 21, der drehend um eine vertikale Drehachse 24 entsprechend einem Pfeil 25 in getakteten Schritten antreibbar ist. Auf einem Umfangsbereich des Drehtisches 21 ist in gleichmäßigen Winkelabständen eine Anzahl von Kapselsegmenten 22 angeordnet. Im gezeigten Ausführungsbeispiel sind insgesamt zehn Kapselsegmente 22 vorgesehen. Es kann aber auch eine andere Anzahl zweckmäßig sein. Im gezeigten bevorzugten Ausführungsbeispiel enthalten die Kapselsegmente 22 eine Anzahl von Kapselaufnahmen 23 zur Aufnahme der Kapseln 1, welche jeweils in einer linearen, geradlinigen Reihe angeordnet sind. Vorliegend hat jedes Kapselsegment 22 eine Reihe von fünf Kapselaufnahmen 23, wobei aber auch eine abweichende Anzahl zweckmäßig sein kann.

Aus der Fig. 1 wird deutlich, dass jedes Kapselsegment 22 aus je einem fest am Umfangsbereich des Drehtisches 21 befestigten Segmentunterteil 28 sowie einem relativ dazu veschwenkbaren Segmentoberteil 29 besteht. Um den Drehtisch 21 herum sind mehrere feststehende, also nicht mit dem Drehtisch 21 mitdrehende Bearbeitungsstationen 31 bis 40 positioniert, die nur schematisch und nicht im Detail dargestellt sind. Die Anzahl der Bearbeitungsstationen 31 bis 40 korrespondiert mit der Anzahl der Kapselsegmente 22, so dass in jeder in Winkel schritten getakteten Drehposition des Drehtisches 21 jedes Kapselsegment 22 im Zugriffsbereich je einer der Bearbeitungsstationen 31 bis 40 zu liegen kommt.

Gemäß dem gezeigten bevorzugten Ausführungsbeispiel werden beginnend mit den ersten beiden Bearbeitungsstationen 31, 32 zunächst provisorisch zusammengesteckte, aus Kapselunterteil und Kapseloberteil bestehende Leerkapseln in die Reihe von Kapselaufnahmen 23 eingesetzt, wobei dann auch im gewöhnlichen Betrieb eine Trennung des aufgesteckten Kapseloberteils vom Kapselunterteil erfolgt. Die nächste Bearbeitungsstation ist eine Ausscheidestation 33. Beim Übergang von der zweiten Einsetz- und Trennstation 32 zur Ausscheidestation 33 wird das Segmentoberteil 29 mit den darin gehaltenen Kapseloberteilen gegenüber dem Segmentunterteil 28 mit den darin gehaltenen Kapselunterteilen verschwenkt. Fehlerhafte, nicht getrennte Leerkapseln werden in der Ausscheidestation 33 ausgeschieden.

Auf die Ausscheidestation 33 folgen hier insgesamt drei Füllstationen 34, 35, 36, in denen die in den Segmentunterteilen 28 gehaltenen Kapselunterteile mit dem vorgesehenen Füllgut befüllt werden. Es kann auch ausreichen, nur eine oder zwei Füllstationen vorzusehen.

Nach dem Durchlaufen der letzten Füllstation 36 erfolgt in einer Einschwenkstation 37 ein Einschwenken des Segmentoberteils 29 zurück in die fluchtende Lage relativ zum Segmentunterteil 28. In der darauf folgenden Schließstation 38 werden die Kapseln 1 verschlossen, indem die zuvor abgezogenen bzw. getrennten Kapseloberteile zurück auf die befüllten Kapselunterteile geschoben und verrastet werden. An die Schließstation 38 schließt sich eine Kontrollstation 39 an. In der Kontrollstation 39 werden geprüfte und für schlecht befundene Kapseln 1 ausgeworfen. In einer nachfolgenden letzten Station, nämlich in der Ausstoßstation 40, werden die verbleibenden und für gut befundenen Kapseln 1 mittels in Fig. 2 dargestellter Stößel 9 oder anderer Auswurfmittel ausgestoßen.

Beim Durchlauf durch sämtliche Bearbeitungsstationen 31 bis 40 behalten die Kapseln 1 ihre Zuordnung zu jeweils einer individuellen Kapselaufnahme 23 bei. Das führt dazu, dass alle Kapseln 1 eines Kapselsegmentes 22 einer eigenen, individuellen "Spur" folgen.

Für die Überführung einer oder mehrerer Kapseln 1 aus der jeweiligen Kapselaufnahme 22 des Kapselsegments 21 zu einer nachfolgenden Prozessstation ist gemäß der Erfindung im Bereich der Ausstoßstation 40 eine Übergabevorrichtung 2 angeordnet. Die Übergabevorrichtung 2 umfasst ein Transportsegment 3 mit mindestens einer Transportaufnahme 4 für jeweils eine Kapsel 1 (Fig. 2). Im gezeigten bevorzugten Ausführungsbeispiel weist das Transportsegment 3 eine der Anzahl der Kapselaufnahmen 22 des Kapselsegments 21 korrespondierende Anzahl von Transportaufnahmen auf. Analog zu den hier beispielhaft gezeigten Kapselsegmenten 22 hat also das Transportsegment 3 insgesamt fünf Transportaufnahmen 4. Die Transportaufnahmen 4 sind derart im Transportsegment 3 positioniert, dass sie in der Ausgangsposition der Übergabevorrichtung 2 nach Fig. 1 genau über den Kapselaufnahmen 23 des in der Ausstoßstation 40 befindlichen Kapselsegments 22 liegen und bereit sind zur Übernahme je einer Kapsel 1. Wegen der eindeutigen Zuordnung der einzelnen Transportaufnahmen 4 zu je einer Kapselaufnahme 23 erfolgt eine Übernahme der Kapseln 1 unter Beibehaltung einer individuellen Spur.

Der Fig. 1 ist des Weiteren noch zu entnehmen, dass das Transportsegment 3 ausgehend von der Ausstoßstation 40 zu weiteren Prozessstationen verfahrbar ist. Dies kann durch eine Linearbewegung herbeigeführt werden. Im gezeigten bevorzugten Ausführungsbeispiel weist die Übergabevorrichtung 2 eine Schwenklagerung auf, mittels derer die Transportaufnahme 4 um eine Schwenkachse 15 entsprechend einem Pfeil 16 in getakteten Schritten schwenkend bewegbar ist. Hierdurch können beispielhaft drei zusätzliche Prozessstationen, nämlich eine erste Prüfstation 41, eine zweite Prüfstation 42 und eine abschließende Weitergabestation 43 angefahren werden. Zusammen mit der bereits erwähnten Ausstoßstation 40 ergeben sich insgesamt vier Stationen, die zyklisch in 90°-Schritten angefahren werden. Es kann aber auch eine abweichende Anzahl von Prozessstationen zweckmäßig sein. Weitere Einzelheiten zur erfindungsgemäßen Übergabevorrichtung 2 ergeben sich aus den Fig. 2 bis 6 und der zugehörigen nachfolgenden Beschreibung:
Fig. 2 zeigt in einer schematischen Schnittdarstellung die Übergabevorrichtung 2 nach Fig. 1 bei der Aufnahme einer Kapsel 1 aus einer Kapselaufnahme 23 eines Kapselsegments 22. Hierzu hat die Übergabevorrichtung 2 zunächst die Schwenkposition nach Fig. 1 eingenommen, bei der sich das Transportsegment 3 im Einzugsbereich der Ausstoßstation 40 unmittelbar oberhalb des dortigen Kapselsegments 22 befindet. Die zunächst im Segmentunterteil 28 und im Segmentoberteil 29 gehaltene Kapsel wird nun durch Ausstoßmittel aus ihrer Kapselaufnahme 23 ausgestoßen und in die zugeordnete Transportaufnahme 4 des Transportsegments 3 befördert. Die Ausstoßmittel sind hier als Stößel 9 mit einem koaxial integrierten Druckluftkanal 10 ausgebildet. Die Anzahl dieser Stößel 9 korrespondiert mit der Anzahl der Kapselaufnahmen 23 pro Kapselsegment 22, so dass im gezeigten Ausführungsbeispiel insgesamt fünf solcher Stößel 9 im Bereich der Ausstoßstation 40 unterhalb des Kapselsegments 22 angeordnet sind. Hierdurch können in einem einzigen Prozesstakt sämtliche in einem Kapselsegment 22 befindliche Kapseln 1 gleichzeitig in das Transportsegment 3 übergeben werden.
Fig. 3 zeigt noch in einer Schemadarstellung einen Teil der im Kapselsegment 22 befindlichen Kapseln 1 in einem bestimmten seitlichen Abstand zueinander. In der mit 1' bezeichneten Position innerhalb des Kapselsegments 3 weisen sie jedoch einen im Vergleich dazu größeren seitlichen Abstand zueinander auf, um nachfolgende Prozesstätigkeiten zu vereinfachen. Für die Aufweitung des seitlichen Abstands bei der Überleitung vom Kapselsegment 22 zum Transportsegment 3 ist gemäß Fig. 2 zwischen je einer Kapselaufnahme 22 und je einer Transportaufnahme 4 je ein Übergabekanal 14 positioniert. Demnach werden die Kapseln 1 aus dem Kapselsegment 22 durch den zugeordneten Übergabekanal 14 hindurch unter Aufweitung ihres seitlichen Abstands zueinander in die mit 1' bezeichnete Position innerhalb des Transportsegments 3 befördert. Dies geschieht gemäß Fig. 2 in zwei Stufen. In einer ersten Stufe wird die Kapsel 1 mittels des Stößels 9 aus ihrer Kapselaufnahme 23 nach oben ausgestoßen. Der Wirkungsbereich des Stößels 9 ist aber dabei nur auf den unmittelbaren Bereich des Kapselsegments 22 beschränkt. Für die nachfolgende Transportbewegung der Kapsel 1 durch den Übergabekanal 14 hindurch wird ein Druckluftstoß durch den Druckluftkanal 10 von unten auf die Kapsel 1 aufgebracht, so dass diese durch den Übergabekanal 14 in ihre zugeordnete Transportaufnahme 4 eingeblasen wird.

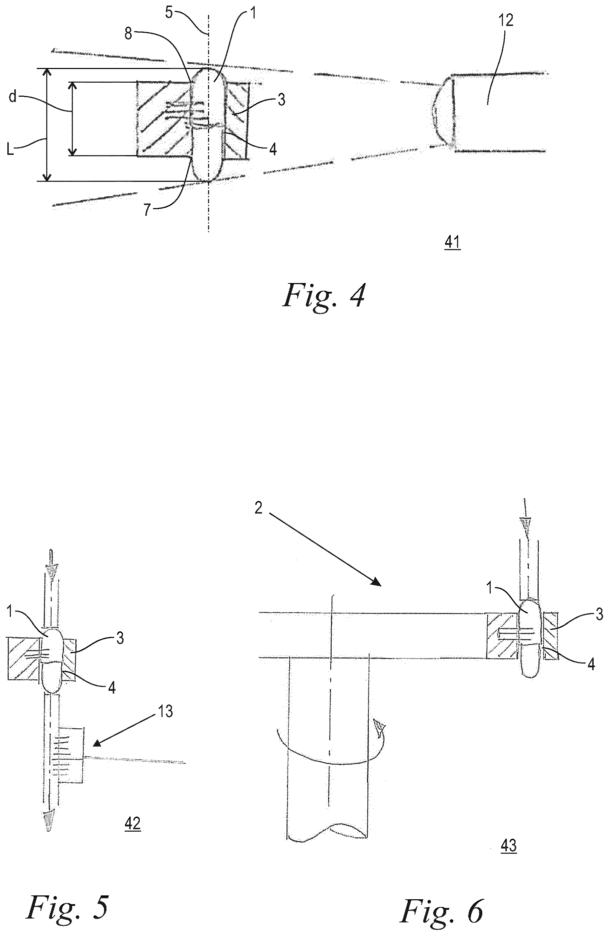

Der Darstellung nach Fig. 2 ist noch zu entnehmen, dass sich die Transportaufnahmen 4 entlang einer vertikalen Längsachse 5 erstrecken und jeweils als Klemmaufnahme mit einem radial zur Längsachse 5 wirkenden Klemmelement für die Kapsel 1' ausgebildet sind. Das Klemmelement ist hier in Form einer Bürste mit radial ausgerichteten Borsten ausgebildet. Es können aber auch andere Formen von Klemmelementen zweckmäßig sein. Jedenfalls drückt das Klemmelement die Kapsel 1' in radialer Richtung, also quer zur Längsachse 5, in eine prismatische Ausformung der ansonsten starren Transportaufnahme 4. Damit ist die Kapsel 1' in allen quer zur Längsachse liegenden Richtungen 5 fixiert. Für eine axiale Positionierung ist zudem korrespondierend zu den Ausstoßmitteln bzw. zu den Stößeln 9 unmittelbar oberhalb jeder Transportaufnahme 7 ein Anschlagelement 11 angeordnet. Das Anschlagelement 11 befindet sich in Richtung der Längsachse 5 gemessen in einem zweiten Abstand a oberhalb des Transportsegments 3, genauer gesagt oberhalb einer in Fig. 4 dargestellten oberen Öffnung 8 der Transportaufnahme 4. Mittels des genannten Druckluftstoßes wird also die Kapsel 1 in ihre zugeordnete Transportaufnahme 4 eingeblasen und kommt dabei zur Anlage am Anschlagelement 11. Dies stellt eine genaue axiale Positionierung der Kapsel 1' relativ zum Transportsegment 3 mit einem oberen Überstand um das Maß des zweiten Abstandes a sicher.

Fig. 4 zeigt noch weitere Einzelheiten zur Ausgestaltung des Transportsegmentes 3 im Bereich seiner Transportaufnahmen 4. Es ist zu erkennen, dass die Transportaufnahme 4 als durch das Transportsegment 3 durchgehender, beidseitig nach oben und auch nach unten offener Kanal mit einer unteren Öffnung 7 und mit einer oberen Öffnung 8 ausgebildet ist. In der Hochrichtung bzw. in Richtung der Längsachse 5 liegen die beiden Öffnungen 7, 8 in einem ersten Abstand d zueinander. Außerdem ist zu erkennen, dass die Kapsel 1 aufrecht stehend in der gleichen Richtung gemessen eine Länge L aufweist, wobei der genannte erste Abstand zwischen den beiden Öffnungen 7, 8 kleiner als die genannte Länge L der Kapsel 1 ist. Unter zusätzlichem Bezug auf die Fig. 2 ist noch anzumerken, dass der zweite Abstand a des Anschlagelements 11 zur oberen Öffnung 8 derart an die Länge L der Kapsel 1 angepasst ist, dass die Kapsel 1 nicht nur nach oben um den zweiten Abstand a aus der oberen Öffnung 8, sondern auch nach unten aus der unteren Öffnung 7 herausragt.

Im Anschluss an die vorstehend beschriebene Übergabe und Positionierung der Kapseln 1' in ihren Transportaufnahmen 4 wird nun das Transportsegment 3 ausgehend von der Ausstoßstation 40 in die nächste Prozessstation, hier in die erste Prüfstation 41 verschwenkt, wie es schematisch in Fig. 4 gezeigt ist. Der zuvor beschriebene Überstand der Kapseln 1 nach oben und/oder unten über die jeweilige Transportaufnahme 4 hinaus erlaubt eine Erfassung der Kapsel 1 durch Prüfmittel, obwohl die Kapsel 1 im Transportsegment 3 gehalten ist. Im gezeigten Ausführungsbeispiel sind die genannten Prüfmittel an der ersten Prüfstation 41 als Messkamera 12 ausgebildet. Diese ist in der Lage, die nach oben und nach unten über das Transportsegment 3 hervorstehenden Abschnitte der Kapsel 1 optisch zu erfassen. Durch Bildauswertung kann eine Formkontrolle vorgenommen werden, welche Rückschlüsse auf mögliche Schädigungen der Kapsel ermöglicht.

Alternativ oder zusätzlich können in einer anderen Prüfstation 42 gemäß Fig. 5 Prüfmittel in Form einer mechanischen Längenmesseinrichtung 13 vorgesehen sein. Hier werden mit angedeuteten Messschieberelementen in Verbindung mit einer Messskala die Kapseln 1 hinsichtlich ihrer tatsächlichen fertigen Länge vermessen. Dies erlaubt die Identifizierung von Längenabweichungen beispielsweise infolge eines unvollständigen Schließvorgangs von Ober- und Unterteil der Kapsel 1. Alternativ können auch andere Prüfmittel beispielsweise in Form einer Waage zur Massebestimmung der Kapseln 1 vorgesehen sein.

Die vorgenannten Prüfstationen 41, 42 mit Prüfmitteln im unmittelbaren Bereich der Transportaufnahme 4 sind optional. Es kann auch ausreichen, nur eine in Fig. 6 gezeigte Weitergabestation 43 vorzusehen. Dies beruht darauf, dass nachfolgende Prozessschritte wie das Säubern, Wiegen und/oder Verpacken auch außerhalb des Einzugsbereichs der Übergabevorrichtung 2 vorgenommen werden können. Jedenfalls zeigt Fig. 6 noch die Übergabevorrichtung 2 mit zu der Weitergabestation 43 geschwenktem Transportsegment 3. Hier erfolgt ein Kapselausstoß für die Übergabe an eine weitere, nachfolgende Prozessstation. Die Kapseln 1 werden dafür durch entsprechende Ausstoßmittel, hier in Form von Stößeln, aus ihren Transportaufnahmen 4 des Transportsegments 3 nach unten ausgestoßen und unter Beibehaltung ihrer Spur, also unter Beibehaltung ihrer individuellen Zuordnung zur jeweiligen Transportaufnahme 4 bzw. Kapselaufnahme 23 (Fig. 1) an die nachfolgende Prozessstation übergeben. Die nachfolgende Prozessstation kann eine externe Prozessstation (Säubern, Wiegen und/oder Verpacken) sein. Es kommt im Rahmen der Erfindung aber auch in Betracht, die Kapseln 1 aus dem Transportsegment 3 wieder zurück in das korrespondierende Kapselsegment 22 des Drehtisches 21 der Kapselfüllmaschine 20 (Fig. 1) zu übergeben, wobei dann nachfolgende Prozessschritte an entsprechenden Prozessstationen dort vorgenommen werden.

## Patentansprüche

1. Übergabevorrichtung (2) einer Kapselfüllmaschine für mindestens eine Kapsel (1) aus einer Kapselaufnahme (22) eines Kapselsegmentes (21) zu einer nachfolgenden Prozessstation, umfassend ein Transportsegment (3) mit mindestens einer Transportaufnahme (4), welche sich entlang einer vertikalen Längsachse (5) erstreckt, wobei die Transportaufnahme (4) als Klemmaufnahme mit einem radial zur Längsachse (5) der Transportaufnahme (4) wirkenden Klemmelement für die Kapsel (1) ausgebildet ist.

2. Übergabevorrichtung nach Anspruch 1,
**dadurch gekennzeichnet, dass** das Klemmelement in Form einer Bürste (6) ausgebildet ist.

3. Übergabevorrichtung nach Anspruch 1 oder 2,
**dadurch gekennzeichnet, dass** die Transportaufnahme (4) als durch das Transportsegment (3) durchgehender, beidseitig offener Kanal mit einer unteren Öffnung (7) und mit einer oberen Öffnung (8) ausgebildet ist, wobei ein erster Abstand (d) zwischen den beiden Öffnungen (7, 8) kleiner als eine Länge (L) der Kapsel (1) ist.

4. Übergabevorrichtung nach Anspruch 3,
**dadurch gekennzeichnet, dass** die Übergabevorrichtung (2) Ausstoßmittel insbesondere in Form eines Stößels (9) zum Ausstoßen der Kapsel (1) aus der Kapselaufnahme (22) und zur Überleitung der Kapsel (1) in die Transportaufnahme (4) des Transportsegmentes (3) umfasst, und dass korrespondierend zu den Ausstoßmitteln ein Anschlagelement (11) unmittelbar oberhalb der Transportaufnahme (7) in einem zweiten Abstand (a) zur oberen Öffnung (y) positioniert, wobei der zweite Abstand (a) an die Länge (L) der Kapsel (1) derart angepasst ist, dass die Kapsel (1) in einem am Anschlagelement (11) anliegenden Zustand nach unten über der unteren Öffnung (7) und nach oben über der oberen Öffnung (8) hervorsteht.

5. Übergabevorrichtung nach einem der Ansprüche 1 bis 4,
**dadurch gekennzeichnet, dass** die Transportaufnahme (4) mit der darin gehaltenen Kapsel (1) zu einer Prüfstation (41, 42) verfahrbar ist, und dass im Bereich der Prüfstation (41, 42) Prüfmittel zum Prüfen der in der Kapselaufnahme (22) gehaltenen Kapsel (1) angeordnet sind.

6. Übergabevorrichtung nach Anspruch 5,
**dadurch gekennzeichnet, dass** die Prüfmittel insbesondere in Form einer Messkamera (12), und/oder einer mechanischen Längenmesseinrichtung (13) und/oder dergleichen ausgebildet sind.

7. Kapselfüllmaschine (20), umfassend einen Drehtisch (21) mit darauf angeordneten Kapselsegmenten (22), wobei die Kapselsegmente (22) jeweils mehrere Kapselaufnahmen (23) für jeweils eine Kapsel (1) aufweisen, wobei der Drehtisch (21) um eine Drehachse (24) derart schrittweise verfahrbar ist, dass die Kapselsegmente (22) sequentiell verschiedene Bearbeitungsstationen durchlaufen, wobei eine Bearbeitungsstation als Ausstoßstation (40) zum Ausstoßen der Kapseln (1) aus dem Kapselsegment (22) ausgebildet ist, und wobei im Bereich der Ausstoßstation (40) eine Übergabevorrichtung (2) nach einem der Ansprüche 1 bis 6 angeordnet ist.

8. Kapselfüllmaschine nach Anspruch 7,
**dadurch gekennzeichnet, dass** das Transportsegment (3) eine mit der Anzahl der Kapselaufnahmen (22) des Kapselsegmentes (21) korrespondierende Anzahl von Transportaufnahmen (4) aufweist, und dass eine ebenfalls damit korrespondierende Anzahl von Ausstoßmitteln insbesondere in Form von Stößeln (9) vorgesehen ist.

9. Kapselfüllmaschine nach Anspruch 8,
**dadurch gekennzeichnet, dass** die Transportaufnahmen (4) des Transportsegmentes (3) in einem größeren Abstand zueinander angeordnet sind als die Kapselaufnahmen (22) des Kapselsegmentes (21), und dass an der Ausstoßstation (40) zwischen den Kapselaufnahmen (22) und den Transportaufnahmen (4) Übergabekanäle (14) positioniert sind.

10. Kapselfüllmaschine nach Anspruch 9,
**dadurch gekennzeichnet, dass** die Ausstoßmittel als Stößel (9) zum Ausstoßen der Kapseln (1) aus den Kapselaufnahmen (22) ausgebildet sind und einen integrierten Druckluftkanal (10) zum Blasen der Kapseln (1) durch die Übergabekanäle (14) hindurch in die jeweilige Transportaufnahme (4) des Transportsegmentes (3) aufweisen.
